# NEUE EUROPÄISCHE PATENTSCHRIFT

(11) **EP 0 860 231 B2**
(45) Veröffentlichungstag und Bekanntmachung des Hinweises auf die Entscheidung über den Einspruch: **26.01.2005**
(45) Hinweis auf die Patenterteilung: 27.03.2002
(21) Anmeldenummer: 98102471.4
(22) Anmeldetag: 13.02.1998
(51) Int. Cl.: B23Q 1/00

(54) **Verfahren und Vorrichtung für die Zufuhr einer Fluidmischung in ein drehendes Maschinenteil**
Mixing fluids in rotating machine parts, method and device therefor
Procédé et dispositif pour mélanger des fluides dans les parties rotatives d'une machine

(30) Priorität: 21.02.1997 JP 3817897
(43) Veröffentlichungstag der Anmeldung: 26.08.1998
(73) Patentinhaber: GAT Gesellschaft für Antriebstechnik mbH, 65201 Wiesbaden (DE)
(72) Erfinder: Gobell, Jürgen, 65611 Oberbrechen (DE)
(74) Vertreter: Lieke, Winfried, Dr.

(56) Entgegenhaltungen:
- EP-A- 0 855 946
- DE-A- 4 200 808
- DE-C- 3 817 799
- US-A- 4 534 803
- US-A- 5 676 506
- Fachgespräch zwichen Industrie und Hochschule : Bohrverfahren im modernen Produktionsprozess, 21/22.2.1995, Institut für spanende Fertigung der Universität Dortmund, Prof. Dr-Ing. K: Weinert.
- Trockenbearbeitung prismatischer Teile. Januar 1996, Herausgeber : Dr-Ing. R. Bartl, Seiten 211 bis 215, 241 bis 246, 289 bis 296

## Beschreibung

Die vorliegende Erfindung betrifft ein Verfahren und eine Vorrichtung für die Zufuhr einer Fluidmischung in ein drehendes Maschinenteil entsprechend den Oberbegriffen der Ansprüche 1 und 3.

Derartige Verfahren und Vorrichtungen sind zum Beispiel von Werkzeugmaschinen bekannt, in welchen zum Beispiel eine Wasser-Öl-Emulsion als Schmier-, Spül- und Kühlmittel durch die sich drehende Spindel einer Werkzeugmaschine bis in ein Werkzeug, wie zum Beispiel einen Bohrer, hinein und an dessen vorderem Ende herausgeführt wird, um die beim Bearbeiten entstehenden Späne herauszuspülen, das Werkzeug und das Werkstück zu kühlen und auch um für eine Verringerung der Reibung zu sorgen.

Dabei wird im Regelfall die Fluidmischung außerhalb der Maschine hergestellt und als Mischung durch die Drehdurchführung in die Maschine eingeführt. Die dabei benötigten Mengen der Emulsion, die teilweise mit den verschiedensten chemischen Zusätzen versetzt ist, ist relativ groß und die Entsorgung oder Wiederaufarbeitung dieser Flüssigkeit ist entsprechend aufwendig und teuer. Als eine Alternative strebt man deshalb ein Besprühen des Arbeitsbereiches eines Werkzeuges mit feinen Öltröpfchen oder einem Sprühnebel aus Öl an, wobei das Öl im wesentlichen für eine Schmierung und Reibungsminderung sorgen soll, während Luft als Trägermedium des Öls gleichzeitig auch die Funktion des Kühlens und Spülens übernimmt. Es hat sich jedoch herausgestellt, daß mit den herkömmlichen Methoden ein entsprechendes Gemisch aus Luft und Öltröpfchen nur sehr schwierig an den Arbeitsbereich eines Werkzeuges heranführbar ist. Da sich das Öl aus einem Nebel fein verteilter Tröpfchen leicht an Zuleitungen und dergleichen abscheidet, ist es erforderlich, ein entsprechendes Gemisch in relativ großen Mengen zuzuführen, damit eine hinreichende Menge im Arbeitsbereich ankommt, wobei allerdings die Gefahr des Verstopfens der Zuleitungen oder aber des stoßweisen Austritts größerer Ölmengen, die sich in den Zuleitungen angesammelt haben, besteht.

Darüberhinaus werden Fluidmischungen auch in anderen Bereichen der Industrie benötigt, zum Beispiel in der Lebensmittelindustrie sowie bei der Herstellung chemischer und pharmazeutischer Produkte.

Dabei ist es generell von Vorteil, wenn bei Fluidmischungen die relativen Bestandteile der einzelnen Fluidkomponenten beliebig erhöht oder vermindert werden können, so daß im Extremfall eine Komponente einen sehr geringen Anteil haben kann, der bei Bedarf auch vollständig fortgelassen werden kann, wobei dennoch das eingestellte bzw. gewünschte Verhältnis der einzelnen Fluidkomponenten an der entsprechenden Verbrauchsstelle ankommen soll, ohne daß zwischenzeitlich eine weitere Reduzierung und/oder Erhöhung einzelner Bestandteile durch Niederschlagen oder Ansammeln auf Transportwegen auftreten kann.

Die US 4,534,803 offenbart ein Werkzeug zum Entfernen von Spänen mit zwei Zuführleitungen für Druckluft und Kühlwasser. Sowohl die Zuführung für Druckluft als auch für Kühlwasser endet in einem Auslaß, so daß sowohl Druckluft als auch Kühlwasser als auch eine Mischung aus beidem über den Auslaß abgegeben werden kann.

Aus den wissenschaftlichen Berichten des Forschungszentrums Karlsruhe, FZKE-PFT177, 1996, S. 243, ist bereits ein System für die Minimalmengenschmierung bekannt, welches den Oberbegriffen der Ansprüche 1 und 3 entspricht. Dieses System stellt jedoch nur einen Versuchsaufbau dar, der für die praktische Anwendung, insbesondere im Dauerlastbetrieb und bei hohen Drehzahlen nicht geeignet ist.

Gegenüber diesem Stand der Technik liegt der vorliegenden Erfindung die Aufgabe zugrunde, ein Verfahren und eine Vorrichtung für die Zufuhr einer Fluidmischung aus mindestens zwei verschiedenen Fluiden von einem stehenden in ein drehendes Maschinenteil bereitzustellen, die die Einstellung weitgehend beliebiger relativer Mangenverhältnisse der Fluidkomponenten, insbesondere eine sehr starke Reduzierung einer der Komponenten im Vergleich zu der anderen erlaubt, wobei an einer von der Drehdurchführung entfernten Stelle dennoch die Fluidmischung in der gewünschten, relativen Zusammensetzung ankommt und wobei das Verfahren und die Vorrichtung auch bei hohen Drehzahlen der Spindel verwendbar sind.

Diese Aufgabe wird hinsichtlich des Verfahrens durch die Merkmale des Anspruchs 1 gelöst.

Hinsichtlich der entsprechenden Vorrichtung wird die der Erfindung zugrundeliegende Aufgabe durch eine Vorrichtung mit den Merkmalen des Anspruchs 3 gelöst.

Mit dem erfindungsgemäßen Verfahren und der entsprechenden Vorrichtung ist es möglich, die einzelnen Komponenten zunächst im gewünschten Mengenverhältnis oder auch weitgehend unabhängig hiervon getrennt zuzuführen und dann unmittelbar die gewünschte Mischung herzustellen, so daß während des verbleibenden, kurzen Transportweges zu einer Verbrauchsstelle eine Entmischung praktisch nicht mehr stattfindet.

Vorzugsweise weist die zentrale Durchführung für die erste Fluidkomponente eine zylindrische Gleitdichtfläche mit einem kleinen Durchmesser von maximal 10 mm auf, wobei kleinere Durchmesser wie zum Beispiel 8 oder auch kleiner als 5 mm bevorzugt sind.

Die kleinen Durchmesser ermöglichen die Ausbildung der zentralen Zuführung mit Gleitdichtflächen, die eine relativ gute Dichtigkeit und die Zufuhr der Fluidkomponente bei relativ hohem Druck ohne große Leckverluste und bei gleichzeitig hohen Rotationsgeschwindigkeiten erlaubt. Letzteres ist insbesondere für Werkzeugmaschinen fürdie Bearbeitung von Werkstükken mit hoher Geschwindigkeit von großer Bedeutung. Der freie Innendurchmesser für dir Hindurchleitung der ersten Fluidkomponente ist dementsprechend noch kleiner und in der Größenordnung von 0,5 bis 3 mm.

Zweckmäßigerweise ist hierzu die zentrale Durchführung so ausgebildet, daß sie einen zylindrischen Hohlzapfen aufweist, der mit dem drehenden Maschinenteil, und insbesondere mit einem zentralen Zuführrohr innerhalb des drehenden Masch inenteils für die erste Fluidkomponente verbunden ist und in eine Bohrung eines nicht drehenden Teils der Drehdurchführung abgedichtet aber drehbar eingesetzt ist.

Die zweite und gegebenenfalls weitere Zuführungen erfolgen radial durch ein berührungsloses System. Auch hierbei dreht sich eine mit dem drehenden Maschinenteil verbundene, zylindrische Fläche der Drehdurchführung innerhalb einer zylindrischen Fläche bzw. Bohrung eines stehenden Teiles der Drehdurchführung, wobei das drehende Teil eine vorzugsweise radiale Bohrung aufweist, die mit einer entsprechenden, mitrotierenden Zuleitung im Inneren des drehenden Teils verbunden ist und auf der Außenseite in der zylindrischen Fläche des drehenden Teiles bzw. in einer in dieser Fläche vorgesehenen, umlaufenden Nut mündet. Ebenso weist auch die zylindrische Fläche des stehenden Maschinenteils eine entsprechende radiale Bohrung auf, die in der zylindrischen Innenfläche dieses Teiles oder in einer entsprechenden umlaufenden Nut mündet, wobei über die erwähnten Nuten, von denen mindestens eine vorhanden sein muß, die jeweiligen radialen Bohrungen des stehenden und drehenden Maschinenteiles miteinander in Verbindung stehen, so daß während der Drehung die Überführung des Fluids möglich ist. Die beiden zylindrischen Teile sind dabei mit einer leichten Spielpassung hergestellt, so daß das Fluid zwischen diese zylindrischen Flächen eindringen kann und ein Gleitschicht bildet, so daß die beiden Dichtflächen einander nicht direkt berühren. Gewisse Leckverluste werden dabei in Kauf genommen. Insbesondere wenn das zweite Fluid Luft ist, so stellen entsprechende Leckverluste kein nennenswertes Problem dar.

Zweckmäßigerweise mündet die Zuführbohrung für das zweite Fluid in einem Rohr, welches mit der Drehachse des drehenden Maschinenteiles koaxial ausgerichtet ist und ein zentrales Innenrohr für die Durchfuhr der ersten Fluidkomponente konzentrisch umfaß.

Beide Rohre münden in der bevorzugten Ausführungsform der Erfindung in einer Mischkammer, die von der Drehdurchführung entfernt und in der Nähe der eigentlichen Verbrauchsstelle liegt. Dabei können selbstverständlich Ventile oder andere Dosiereinrichtungen am Übergang von den jeweiligen Rohren in die Mischkammer vorgesehen sein.

Alle derartigen Ventile und sonstigen Einrichtungen sollten möglichst symmetrisch zur Rotationsachse angeordnetsein, d.h. es sollten mindestens paarweise auf diametral gegenüberliegenden Seiten der Achse immer dieselben Teile angeordnet sein oder aber die betreffenden Teile sollten von vornherein Zylindersymmetrie haben und konzentrisch zur Achse angeordnet sein. Die symmetrische Anordnung oder Ausbildung ist insbesondere bei hohen Drehzahlen von Bedeutung, um Unwuchten zu vermeiden.

Zweckmäßigerweise ist die gesamte Drehdurchführung axial verschiebbar gelagert, was es ermöglicht, daß diese Drehdurchführung gemeinsam mit den zentralen Rohren, in welche sie mündet, axial bewegt werden kann. Bei manchen Maschinen, wie zum Beispiel Werkzeugmaschinen, erfolgt das Festspannen von Werkzeuge mit Hilfe einer axialen Bewegung einer inneren Zugstange, die im vorliegenden Falle als Rohr ausgebildet sein und in ihrem Inneren noch die beiden Zufuhrrohre für die Fluidkomponenten aufweisen sollte. Zweckmäßigerweise sollten dann diese beiden Rohre gemeinsam mit der Zugstange verbunden sein, wobei die gleichzeitige axiale Bewegbarkeit der Drehdurchführung eine Relativbewegung zwischen den Zufuhrrohren und der Drehdurchführung zu vermeiden hilft. Damit ändert sich insbesondere auch nicht das Volumen in der Zuleitung zwischen Drehdurchführung und Mischkammer, so daß auch die Zufuhr der Fluidmischung keine Unterbrechung oder stoßweise Änderung erfährt.

Zweckmäßigerweise sind zu diesem Zweck an der Drehdurchführung flexible Anschlüsse für die erste und zweite Fluidkomponente, sowie auch für gegebenenfalls weitere Fluidkomponenten vorgesehen, die vorzugsweise in gleicher Weise wie die zweite Komponente radial zugeführt werden.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figur.

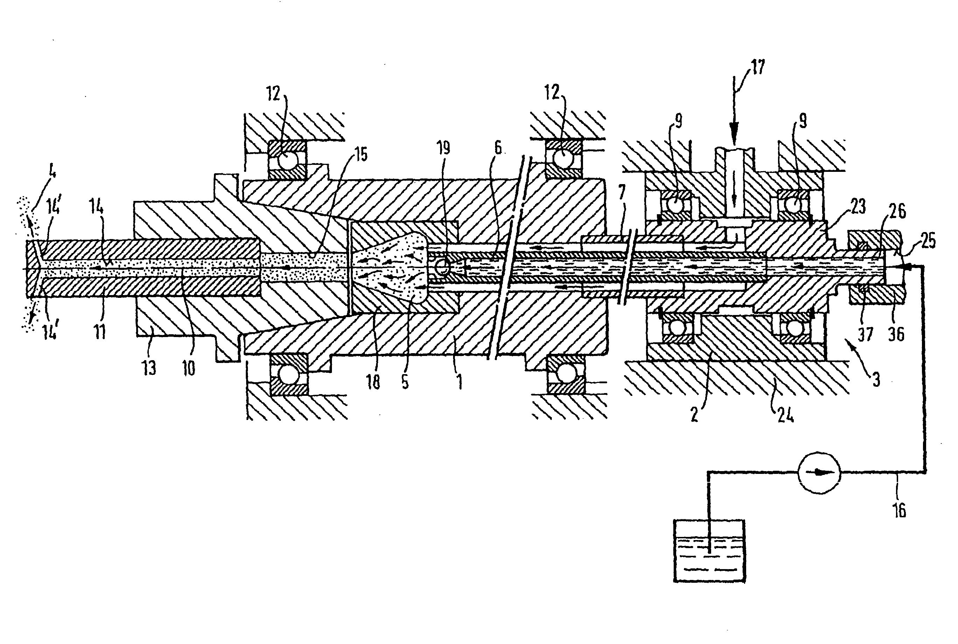

Die einzige Figur zeigt schematisch die wesentlichen Komponenten einer Maschine mit einem drehbaren Teil und der zugehörigen, erfindungsgemäßen Drehdurchführung.

In der Figur ist mit 1 ein um die Rotationsachse 10 drehbares Maschinenteil, zum Beispiel eine Maschinenspindel bezeichnet, die in Lagern 12 drehbar gelagert ist. Das drehbare Teil 1 ist unterbrochen dargestellt und kann im Vergleich zu den übrigen Teilen eine erheblich größere Länge haben. An einem Ende der Spindel 1 ist ein Werkzeughalter 13 vorgesehen, in welchem ein ebenfalls nur schematisch angedeutetes Werkzeug 11 gehalten wird. Das Werkzeug 11 weist eine zentrale Bohrung 14 und kurze radiale Bohrungen 14' auf, durch welche eine Fluidmischung 4, zum Beispiel in Luft schwebende, feine Öltröpfchen, in den unmittelbaren Arbeitsbereich des Werkzeuges 11 eingesprüht wird. Auch der Werkzeughalter 13 weist in seinem kegelförmigen Schaft eine entsprechende Bohrung 15 auf, die mit der Bohrung 14 des Werkzeuges 11 fluchtet und schließt an eine darüberliegende Mischkammer 5 an, die in einem zusätzlichen, getrennt in die Spindel 1 eingesetzten Teil 18 ausgebildet ist. In diese Mischkammer 5 mündet das zentrale Zufuhrrohr 6, zum Beispiel für Öl, über ein Rückschlagventil 19, während das hierzu konzentrische, das Rohr 6 umfassende Luftrohr 7 direkt in die Mischkammer 5 mündet. Das Rückschlagventil 19 kann durch entsprechende Druckbeaufschlagung in dem zentralen Zuführrohr 6 geöffnet werden. Wenn im Bereich das Öffnungsdruckes des Ventils 19 kurzzeitige Druckschwankungen in dem Rohr 6 erzeugt werden, so treten durch das Ventil 19 in entsprechender Folge kleine Öltröpfchen aus. Diese werden durch die Druckluft mitgerissen, die über die Zufuhrleitung 17 und das zentrale Zufuhrrohr 7 in die Mischkammer 5 hineingedrückt wird. Dabei läßt sich das relativ Mengenverhältnis zwischen Luft und Öltröpfchen durch entsprechende Druckbeaufschlagung der beiden Zufuhrleitungen 16, 17 in weiten Bereichen steuern, insbesondere kann für bestimmte Anwendungssituationen die Zufuhr von Öl durch die Leitung 16, das Rohr 6 und das Ventil 19 vollständig unterbunden werden. Dies kann zum Beispiel zweckmäßig sein zum Ausblasen des Werkzeuges 11 und der Umgebung des Werkzeuges 11. Anschließend steht wegen des geringen Abstandes zwischen der Mischkammer 5 und der Arbeitsfläche des Werkzeuges 11 nach dem Öffnen des Ventils 19 sofort wieder die gewünschte Mischung zur Verfügung, ohne daß längere Totzeiten für den relativ langen Transportweg durch das zentrale Zufuhrrohr 6 in Kauf genommen werden müssen.

Am anderen Ende ist die Drehdurchführung 3 dargestellt, deren innerer, drehbarer Abschnitt starr mit den Rohren 6, 7 verbunden ist. Zur Klarstellung sei darauf hingewiesen, daß unter dem Begriff "Rohr" im Sinne der vorliegenden Erfindung und bezüglich der mit 6 und 7 bezeichneten Bauteile auch entsprechende Abschnitte der zentral und koaxial hierzu angeordneten Leitungen für Öl bzw. Luft fallen, die als Bohrungen entweder in der Spindel 1 oder dem drehbaren Abschnitt 23 der Drehdurchführung 3 ausgebildet sind.

Der drehbare Abschnitt 23 der Drehdurchführung 3 ist in Lagern 9 drehbar in dem äußeren, nicht drehbaren Teil 2 der Drehdurchführung 3 gelagert. Dieser äußere Teil 2 ist zusammen mit dem inneren drehbaren Teil 23 axial verschiebbar in eine entsprechenden, im wesentlichen zylindrischen Führung 24 gehaltert, wobei zusätzlich nicht dargestellte Mittel, wie zum Beispiel eine Springfeder, eine Drehung des Teiles 2 in der Führung 24 verhindert, jedoch die Axialbewegung des Teiles 2 in der Führung 24 zulassen.

Die äußeren Zuführleitungen bzw. Anschlüsse für das Öl bzw. für Luft sind mit 16 und 17 bezeichnet. Dabei wird die eigentlichen Drehdurchführung für das Öl durch einen zylindrischen Hohlzapfen 26 gebildet, der in eine passende, zylindrische Bohrung 25 eines nicht drehbaren Abschnittes 36 eingesetzt ist. Die Abdichtung zwischen dem Hohlzapfen 26 und der zylindrischen Bohrung des Teiles 36 erfolgt über eine Dichtung 37.

Dabei hat der Zapfen 26 in der bevorzugten Ausführungsform der Erfindung einen Durchmesser von weniger als 5 mm, vorzugweise von etwa 3 - 4 mm, was selbstverständlich auch voraussetzt, daß nur entsprechend kleine Menge an Öl durch das zentrale Zufuhrrohr 6 und die innere Bohrung des Hohlzapfens 26 zugeführt werden müssen. Der Innendurchmesser des Hohlzapfens 26 ist um die zweifache Wandstärke desselben geringer, beträgt also etwa 0,5 bis 2 mm.

Die Zufuhr von Luft erfolgt über die Zufuhrleitung 17 radial in das Rohr 7, welches das Rohr 6 konzentrisch umgibt. Die Einzelheiten einer solchen radialen Zuführung über zylindrische, einander in leichter Spielpassung umgebende Flächen des drehenden Teiles 23 und des stehenden Teiles 2 sind an sich bekannt und brauchen hier nicht weiter beschrieben zu werden.

Nicht näher dargestellt ist in der Figur eine Spannvorrichtung, mit deren Hilfe das Werkzeug 11 bzw. der Werkzeughalter 13 in der entsprechenden Aufnahme der Spindel 1 festgespannt werden. Üblicherweise erfolgt dies durch axiales Bewegen einer Zugstange, wobei diese Zugstange wiederum durch das Rohr 7 gebildet werden kann, welches dann in der Spindel 1 axial verschiebbar gelagert ist.

Dieses Rohr ist dann mit entsprechenden Spanneinrichtungen verbunden und wird im allgemeinen durch Federn in Spannrichtung vorgespannt. Das Lösen erfolgt gegen die Kraft der Federn im allgemeinen hydraulisch oder pneumatisch, indem die Zugstange, und mit ihr die zentralen Rohre 6, 7 sowie die gesamte Drehdurchführung 3 axial relativ zu der Spindel 1 bewegt werden. Zu diesem Zweck sind die Zuleitungen 16, 17 als flexible Zuleitung ausgebildet, die eine entsprechende axiale Bewegung der Drehdurchführung 3 zulassen.

Aufgrund der Ausgestaltung der Drehdurchführung mit einem zentralen Anschluß kleinen Durchmessers für die Zufuhr von oft unter relativ hohem Druck stehenden Öl, verbunden mit der radialen und im wesentlichen berührungslosen Zufuhr von Luft ist es möglich, die beiden Fluide getrennt zuzuführen une gleichzeitig hohe Drehzahlen der Spindel und damit auch des drehenden Teiles 23 der Drehdurchführung 3 zuzulassen. Die weitgehend berührungslose Zuführung von Luft läßt entlang der zylindrischen Flächen der rotierenden Teiles 23 und des stehenden Teiles 2 nur wenig Reibungswärme entstehen, die durch diese Teile abgeführt werden kann. Die Zufuhr von Öl, welches im allgemeinen unter wesentlich höherem Druck steht, erfolgt über eine Durchführung mit kleinem Durchmesser, wobei zwar die Dichtflächen des Hohlzapfens 26 und des Dichtringes 37 aufeinander gleiten, wegen des geringen Durchmessers jedoch die entsprechenden Relativgeschwindigkeiten auch bei hohen Drehzahlen noch nicht übermäßig groß sind, so daß die entstehende Reibungswärme auch an dieser Stelle problemlos abgeführt werden kann. Die Drehdurchführung kann somit die beiden Komponenten Öl und Luft auch bei relativ hohen Drehzahlen problemlos in das Innere des rotierenden Maschinenteiles an eine von der Drehdurchführung abgelegene Stelle zuführen, wo die Mischung der beiden Komponenten erfolgen kann. Diese Mischung wiederum kann in weitgehend beliebigen Mischungsverhältnissen, insbesondere mit einem sehr geringen Ölanteil, hergestellt und der Verbrauchsstelle zugeführt werden. Der Ölanteil kann bei Bedarf auch auf Null reduziert werden.

## Patentansprüche

1. Verfahren zum Zuführen einer Fluidmischung (4) in ein drehendes Maschinenteil (11) mit einer Drehdurchführung (3) von einem stehenden (2) in das drehende bzw. drehbare Maschinenteil (1, 11), wobei die Fluidmischung (4) zu einer von der Drehdurchführung (3) entfernt gelegenen Stelle des drehenden Maschinenteiles (1, 11) geführt wird, wobei die Fluidkomponenten durch die Drehdurchführung (3) getrennt zugeführt werden und erst in der Nähe der eigentlichen Verbrauchsstelle die Mischung (4) in einer Mischkammer (5) mit den gewünschten relativen Anteilen innerhalb des drehenden Maschinenteiles (1) hergestellt wird, **dadurch gekennzeichnet, daß** eine erste Fluidkomponente zentral und eine zweite Fluidkomponente radial durch ein im wesentlichen berührungsloses Überführungssystem durch die Drehdurchführung hindurchgeführt wird.

2. Verfahren nach Anspruch 1, **dadurch gekennzeichnet, daß** die erste Fluidkomponente auf einem kleinen Durchmesser von weniger als 5 mm durch die Drehdurchführung hindurch geleitet wird.

3. Vorrichtung für die Zufuhr einer Fluidmischung (4) in ein drehendes Maschinenteil (11) mit einer Drehdurchführung (3) von einem stehenden (2) in das drehende bzw. drehbare Maschinenteil (1, 11), wobei die Fluidmischung (4) zu einer von der Drehdurchführung (3) entfernt gelegenen Stelle des rotierenden Maschinenteiles (1, 11) geführt wird und die Drehdurchführung (3) zwei getrennte Zuführungen (16, 17) für je eine Komponente der Fluidmischung aufweist, wobei die im inneren des drehenden Maschinenteils angeordneten Zuführleitungen (6, 7) für das erste und das zweite Fluid in eine von der Drehdurchführung (3) entfernt gelegene Mischkammer (5) münden, **dadurch gekennzeichnet, daß** eine erste Zuführung (16) zentral entlang der Rotationsachse (10) des drehenden Maschinenteiles (1, 11) und die zweite Zuführung (17) außerhalb der Rotationsachse (10) angeordnet sind, wobei die zweite Zuführung (17) ein radiales, im wesentlichen berührungsloses Überführungssystem aufweist.

4. Vorrichtung nach Anspruch 3, **dadurch gekennzeichnet, daß** die erste, zentrale Durchführung Gleitflächen mit einem Durchmesser von höchstens 10 mm, vorzugsweise von höchstens 8 mm, aufweist.

5. Vorrichtung nach Anspruch 4, **dadurch gekennzeichnet daß** die zentrale Durchführung (6, 16) einen zylindrischen Hohlzapfen (26) aufweist, der in eine Bohrung (25) eines nicht drehenden Teils (24) der Drehdurchführung (3) abgedichtet eingesetzt ist.

6. Vorrichtung nach Anspruch 5, **dadurch gekennzeichnet, daß** der Außendurchmesser des Hohlzapfens (26) und der Innendurchmesser der Bohrung (25) höchstens 5 mm beträgt und daß die zylindrische Außenfläche des Hohlzapfens sowie die zylindrische Innenfläche der Bohrung mindestens teilweise als Gleitdichtflächen ausgebildet sind.

7. Vorrichtung nach Anspruch 6, **dadurch gekennzeichnet, daß** der Hohlzapfen (26) axial verschiebbar in der Bohrung (25) aufgenommen ist.

8. Vorrichtung nach Anspruch 3, **dadurch gekennzeichnet, daß** die zweite Zuführung (17) in ein mit dem drehenden Maschinenteil (1) drehbares Rohr (7) mündet, welches ein zentrales, ebenfalls mit dem Maschinenteil (1) drehbares Rohr (6) umfaßt, in welches die erste Zuführung (16) bzw. der Hohlzapfen (26) mündet.

9. Vorrichtung nach Anspruch 3, **dadurch gekennzeichnet, daß** die Mischkammer (5) in der Nähe des mit der Fluidmischung (4) zu versorgenden, drehenden Maschinenteiles (11) angeordnet ist.

10. Vorrichtung nach einem der Ansprüche 3 bis 9, **dadurch gekennzeichnet, daß** die Drehdurchführung (3) gemeinsam mit den in dem drehenden Maschinenteil (1) angeordneten Zuführleitungen (6, 7) axial verschiebbar gelagert ist.

11. Vorrichtung nach Anspruch 10, **dadurch gekennzeichnet, daß** die Zuführung (16) für das erste Fluid und die Zuführung (17) für das zweite Fluid jeweils flexible Zuleitungen aufweisen.

## Claims

1. A method of feeding a fluid mixture (4) into a rotating machine part (11) with a rotary communication (3) from a stationary (2) into the rotating or rotatable machine part (1, 11), wherein the fluid mixture (4) is guided to a location of the rotating machine part (1, 11), which location is remote from the rotary communication (3), wherein the fluid components are fed separately through the rotary communication (3) and it is only in the proximity of the actual location of use that the mixture (4) is produced in a mixing chamber (5) with the desired relative proportions within the rotating machine part (1), **characterised in that** a first fluid component is passed centrally and a second fluid component is passed radially through a substantially contact-less transfer system through the rotary communication.

2. A method according to claim 1 **characterised in that** the first fluid component is passed through the rotary communication on a small diameter of less than 5 mm.

3. Apparatus for feeding a fluid mixture (4) into a rotating machine part (11) with a rotary communication (3) from a stationary (2) into the rotating or rotatable machine part (1, 11), wherein the fluid mixture (4) is guided to a location of the rotating machine part (1, 11), which location is remote from the rotary communication (3), and the rotary communication (3) has two separate feed means (16, 17) for respective components of the fluid mixture, wherein the feed conduits (6, 7) arranged in the interior of the rotating machine part for the first and second fluids open into a mixing chamber (5) which is remote from the rotary communication (3), **characterised in that** a first feed means (16) is arranged centrally along the axis of rotation (10) of the rotating machine part (1, 11) and the second feed means (17) is arranged outside the axis of rotation (10), wherein the second feed means (17) has a radial substantially contact-less transfer system.

4. Apparatus according to claim 3 **characterised in that** the first central communication means has sliding surfaces of a diameter of at most 10 mm and preferably at most 8 mm.

5. Apparatus according to claim 4 **characterised in that** the central communication means (6, 16) has a cylindrical hollow projection (25) which is fitted sealingly into a bore (25) of a non-rotating part (24) of the rotary communication (3).

6. Apparatus according to claim 5 **characterised in that** the outside diameter of the hollow projection (26) and the inside diameter of the bore (25) is at most 5 mm and that the cylindrical outside surface of the hollow projection and the cylindrical inside surface of the bore are at least in part in the form of sliding sealing surfaces.

7. Apparatus according to claim 6 **characterised in that** the hollow projection (26) is axially displaceably accommodated in the bore (25).

8. Apparatus according to claim 3 **characterised in that** the second feed means (17) opens into a tube (7) which is rotatable with the rotating machine part (1) and which encloses a central tube (6) which is also rotatable with the machine part (1) and into which the first feed means (16) or the hollow projection (26) opens.

9. Apparatus according to claim 3 **characterised in that** the mixing chamber (5) is arranged in the proximity of the rotating machine part (11) which is to be supplied with the fluid mixture (4).

10. Apparatus according to one of claims 3 to 9 **characterised in that** the rotary communication (3) is supported axially displaceably jointly with the feed conduits (6, 7) arranged in the rotating machine part (1).

11. Apparatus according to claim 10 **characterised in that** the feed means (16) for the first fluid and the feed means (17) for the second fluid each have flexible feed lines.

## Revendications

1. Procédé pour amener un mélange de fluides (4) dans une partie de machine tournante (11) comportant un passage tournant (3) d'une partie de machine fixe (2) dans la partie de machine tournante ou apte à tourner (1, 11), le mélange de fluides (4) étant amené à un emplacement de la partie de machine tournante (1, 11) qui est à distance du passage tournant (3), de sorte que les composés fluides sont amenés séparément par le passage tournant (3) et le mélange (4) est réalisé dans une chambre de mélange (5) avec les proportions relatives souhaitées à l'intérieur de la partie de machine tournante (1) seulement à proximité de l'emplacement d'utilisation proprement dit **caractérisé en ce qu'** un premier composé fluide est amené au centre, et un second composé fluide radial dans un système de transfert pratiquement sans contact en étant décalé par le passage tournant.

2. Procédé selon la revendication 1, **caractérisé en ce que** le premier composé fluide est conduit à travers le passage tournant sur un petit diamètre de moins de 5 mm.

3. Dispositif pour amener un mélange de fluide (4) dans une partie de machine tournante (11) dotée d'un passage tournant (3) d'une partie de machine fixe (2) dans la partie de machine tournante ou apte à tourner (1, 11), le mélange de fluides (4) étant amené à un emplacement de la partie de machine tournante (1, 11) qui est situé à distance du passage tournant, et le passage tournant (3) comportant deux amenées séparées (16, 17) à raison d'une par composé du mélange de fluides, les conduites d'amenée (6, 7) disposées à l'intérieur de la partie de machine tournante et destinées aux premier et deuxième fluides débouchant dans une chambre de mélange (5) située à distance du passage tournant (3), **caractérisé en ce qu'**une première amenée (16) est agencée centralement le long de l'axe de rotation (10) de la partie de machine toumante (1, 11) et la deuxième amenée (17) est agencée à l'extérieur de l'axe de rotation (10), la deuxième amenée (17) comportant un système de transfert radial sensiblement sans contact.

4. Dispositif selon la revendication 3, **caractérisé en ce que** le premier passage central comporte des surfaces de glissement ayant un diamètre de 10 mm maximum, de préférence de 8 mm maximum.

5. Dispositif selon la revendication 5, **caractérisé en ce que** le passage central (6, 16) comporte un pivot creux cylindrique (26) qui est inséré de façon étanche dans un alésage (25) d'une partie fixe en rotation (24) du passage tournant (3).

6. Dispositif selon la revendication 5, **caractérisé en ce que** le diamètre extérieur du pivot creux (26) et le diamètre intérieur de l'alésage (25) sont de 5 mm maximum et **en ce que** la surface extérieure cylindrique du pivot creux ainsi que la surface intérieure cylindrique de l'alésage sont conformées au moins partiellement en surfaces de glissement étanches.

7. Dispositif selon la revendication 6, **caractérisé en ce que** le pivot creux (26) est reçu de façon mobile axialement dans l'alésage (25).

8. Dispositif selon la revendication 3, **caractérisé en ce que** la seconde amenée (17) débouche dans un tube (7) tournant avec la partie de machine tournante (1), lequel tube comporte un tube (6) tournant également avec la partie de machine tournante (1), tube dans lequel débouche la première amenée (16) ou le pivot creux (26).

9. Dispositif selon la revendication 3, **caractérisé en ce que** la chambre de mélange (5) est agencé à proximité de la partie de machine tournante (11) qui doit être alimentée en mélange de fluide (4).

10. Dispositif selon l'une des revendications 3 à 9, **caractérisé en ce que** le passage tournant (3) est monté de façon mobile axialement en commun avec les conduites d'amenée (6, 7) agencées dans la partie de machine tournante (1).

11. Dispositif selon la revendication 10, **caractérisé en ce que** l'amenée (16) pour le premier fluide et l'amenée (17) pour le second fluide comportent chacune des conduites d'amenée souples.
